# EUROPÄISCHE PATENTSCHRIFT

(11) **EP 3 922 974 B1**
(45) Veröffentlichungstag und Bekanntmachung des Hinweises auf die Patenterteilung: **29.11.2023**
(21) Anmeldenummer: 21178176.0
(22) Anmeldetag: 08.06.2021
(51) Int. Cl.: G01N 1/42, G01N 25/06

(54) **VORRICHTUNG UND VERFAHREN ZUM GEFRIEREN EINER MESSPROBE SOWIE GEFRIERPUNKT-OSMOMETER UND VERFAHREN ZUM OSMOMETRISCHEN BESTIMMEN EINER MESSPROBE**
DEVICE AND METHOD FOR FREEZING A SAMPLE AND FREEZING POINT OSMOMETER AND METHOD FOR THE OSMOMETRIC DETERMINATION OF A SAMPLE
DISPOSITIF ET PROCÉDÉ DE CONGÉLATION D'UN ÉCHANTILLON DE MESURE, AINSI QUE OSMOMÈTRE À POINT DE CONGÉLATION ET PROCÉDÉ DE DÉTERMINATION OSMOMÉTRIQUE D'UN ÉCHANTILLON DE MESURE

(30) Priorität: 09.06.2020 DE 102020115340
(43) Veröffentlichungstag der Anmeldung: 15.12.2021
(73) Patentinhaber: Meske, Markus, 10715 Berlin (DE)
(72) Erfinder: Meske, Markus, 10715 Berlin (DE)
(74) Vertreter: Bittner, Thomas L.

(56) Entgegenhaltungen:
- DE-A1-102010 011 613
- KR-A- 20200 038 106

## Beschreibung

Die Erfindung betrifft ein Gefrierpunkt Osmometer und ein Verfahren zum osmometrischen Bestimmen einer Messprobe.

### Hintergrund

Für das experimentelle Bestimmen oder Messen einer Probe einer Flüssigkeit kann vorgesehen sein, die Probe mittels Kühlen und Gefrieren aus dem flüssigen in einen gefrorenen Zustand (Phasenänderung) zu überführen. Derartiges wird beispielsweise genutzt, um eine Messprobe einer zu bestimmenden Flüssigkeit osmometrisch zu untersuchen. Aber auch bei anderen experimentellen Bestimmungen von Proben können Informationen über den Gefrierprozess oder den gefrorenen Zustand der Probe von Interesse sein, beispielsweise zur Untersuchung einer Kristallstruktur der gefrorenen Probenflüssigkeit.

Zum osmometrischen Untersuchen von Messproben werden Gefrierpunkt-Osmometer verwendet.

Dokument US 7 182 509 B2 offenbart eine Vorrichtung zum Bestimmen einer Temperatur, bei der eine Phasenänderung in einer Fluidprobe auftritt, sowie ein Verfahren zum Messen einer Temperatur, bei der eine Phasenänderung in einer Probe und einer Probenzelle auftritt. Die bekannte Vorrichtung umfasst eine Probenzelle zum Bereitstellen einer direkten Sammlung der Probe von einer Probenquelle, die an einem Sammelende durch kapillare Anziehung zwischen dem Sammelende und der Probe gesammelt und zurückgehalten wird, wobei die Probenzelle einen Längsdurchgang aufweist, der sich vom Sammelende bis zu einem entfernten Ende erstreckt, durch das Licht übertragen wird, um ein Bild der Probe zu liefern, wie sie am Sammelende des Durchgangs zurückgehalten wird. Eine Querschnittsfläche des Durchgangs am entfernten Ende ist größer als am Sammelende. Es ist eine Heiz- und Kühlanordnung vorgesehen, die eine Temperaturerfassungsvorrichtung umfasst, wobei die Heiz- und Kühlanordnung die Probenzelle während der Bestimmung der Temperatur, bei der die Phasenänderung auftritt, mittels der Temperaturmessvorrichtung hält und thermisch berührt, während die Probe im Sammelende positioniert ist. Weiterhin ist ein Beleuchtungssystem zum Richten eines Lichtstrahls auf das Sammelende durch die Probe vorgesehen, durch den Längsdurchgang und aus dem entfernten Ende heraus, um die Betrachtung der Probe vom entfernten Ende aus zu ermöglichen, um die Temperatur zu bestimmen, bei der Phasenänderung auftritt.

Dokument US 4 657 409 A betrifft ein Verfahren zum Messen des Gefrierpunkts einer Flüssigkeit unter Verwendung einer nicht-adiabatischen Thermodynamik für die Kühlkammer. Die Temperatur der Kühlkammer, in der die Messung durchgeführt wird, wird aktiv geändert, um den Nettowärmestrom aus dem Probenteil der zu messenden Flüssigkeit zumindest während der Keimbildung des Probenteils zu verringern. Durch aktives Ändern der Kühlkammertemperatur nähert sich die Thermodynamik der Probe selbst während der Keimbildung einem echten adiabatischen Zustand an.

Dokument EP 3 463 549 A1 offenbart einen Stopfen für einen Osmometrie-Probenbecher oder ein Fläschchen, der dafür vorgesehen ist, den Probenbecher oder das Fläschchen zu verschließen, um ein signifikantes Verdampfen einer Probenlösung im Becher oder Fläschchen zu verhindern, bevor eine Osmolalitätsmessung durchgeführt wird.

Dokument US 3 203 226 A betrifft ein Verfahren zur Bestimmung der Konzentration einer Substanz, umfassend die folgenden Schritte: Einbringen einer abgemessenen Probe der Substanz in flüssiger Form in einen Behälter; Zirkulieren eines Kühlmediums um den Behälter, wobei das Kühlmedium eine Temperatur aufweist, die um einige Grad niedriger ist als ein normaler Gefrierpunkt der Substanz, während gleichzeitig die Substanz sanft gerührt wird, um die Temperaturgradienten darin wieder auszugleichen; Unterkühlen der Probe um eine vorbestimmte Anzahl von Grad unter ihren normalen Gefrierpunkt und Herstellen eines metastabilen flüssigen Gleichgewichtszustandes durch sanftes Rühren der Substanz, Beenden der Zirkulation des Kühlmediums um den Behälter; Entfernen des Kühlmediums um den Behälter herum, um eine isolierende Lufttasche um diesen herum zu bilden, währenddessen Fortführen des sanften Rührens der Probe, um die Probe zu isothermisieren; Ausüben eines Schocks von einer externen Quelle auf den Behälter und die Probe, wodurch der metastabile Gleichgewichtszustand gestört und ein Teil der Substanz zum Gefrieren gebracht wird, und direktes Ablesen des osmotischen Drucks der Substanz.

Dokument US 3 263 487 A offenbart eine Vorrichtung zur Messung der Gefrierpunktserniedrigung, die durch gelöste Stoffe in einem flüssigen Lösungsmittel erzeugt wird.

Dokument DE 3 216 303 A1 offenbart ein Osmometer zur Bestimmung des osmotischen Druckes in kolloidalen Lösungen mit einer Messzelle aus einer oberen und einer unteren Zellenhälfte, die eine Probenkammer und eine Druckmesskammer einschließen, die voneinander durch eine semipermeable Membran getrennt sind. Im Eingangskanal zur Probenkammer ist ein Septuminjektor aus gummielastischem Material angeordnet, und ferner mündet in den Eingangskanal zwischen dem Septuminjektor und der Probenkammer ein weiterer, mit einer Pumpe zum Spülen der Probenkammer verbundener weiterer Eingangskanal. Ferner besteht die Probenkammer aus einem kurzen Kanalabschnitt, der an die Membran offen angrenzt. Hierdurch kann einerseits Probe- und Spüllösung in den Eingangskanal zur Probenkammer eingebracht werden. Ferner kann mittels der Pumpe unmittelbar nach einem Messvorgang die Probenkammer gespült werden.

Dokument DE 2 951 709 A1 offenbart ein Gerät zur Gefrierpunkts-Osmometrie mit einer Kühleinrichtung, mit einem Messgefäß zur Aufnahme einer Probelösung und mit einem Auslösedraht zur Einleitung der Kristallisation. Oberhalb der Einfüllöffnung des sich in der Kühleinrichtung befindenden Messgefäßes ist eine zweite Kühleinrichtung angeordnet. Es ist eine Hubeinrichtung zur Bewegung des Auslösedrahtes mit seiner in der zweiten Kühleinrichtung abgekühlten Spitze in die im Messgefäß in der ersten Kühleinrichtung unterkühlte Probelösung vorgesehen.

Dokument DE 10 2010 011 613 A1 betrifft ein Gefrierpunkts-Osmometer mit einer Kühlvorrichtung mit einem ersten Peltierelement, einem Probengefäß zur Aufnahme einer zu messenden flüssigen Probe, mit einem thermoelektrischen Sensor, und einem Auslöseelement zur Einleitung der Kristallisation. Das Probengefäß ist fest auf der Kühlvorrichtung und in thermischem Kontakt hiermit angeordnet, und die Kühlung des ersten Peltierelements erfolgt durch die Oberfläche eines Gerätegehäuses.

Dokument DE 2 331 291 A1 offenbart eine Vorrichtung zur Messung der Gefrierpunktserniedrigung geringer Volumina von Flüssigkeiten zur Bestimmung der Osmolarität.

Im Dokument KR 10 2020 0038106 A ist ein Verfahren zum Herstellen von Wassereis in einem Kühl- oder Gefrierschrank beschrieben, wobei zum Herstellen von möglichst klarem Eis vorgesehen ist, mittels einer vom zu gefrierenden Wasser beabstandet angeordneten Elektrode eine Blitzentladung auszulösen, um den Gefrierprozess zu initiieren.

### Zusammenfassung

Aufgabe der Erfindung ist es, ein Gefrierpunkt-Osmometer und ein Verfahren zum osmometrischen Bestimmen einer Messprobe anzugeben, bei denen der Gefrierprozess auf effiziente und reproduzierbare Art und Weise ausgelöst werden kann.

Zur Lösung sind ein Gefrierpunkt-Osmometer sowie ein Verfahren zum osmometrischen Bestimmen einer Messprobe nach den Ansprüchen 1 und 12 geschaffen. Ausgestaltungen sind Gegenstand von abhängigen Unteransprüchen.

Beim Gefrieren der Messprobe (Phasenänderung oder -übergang) der zu bestimmenden Flüssigkeit wird diese zunächst gefrierfrei gekühlt, um dann mittels des Lichtbogens (Blitz) den Gefrierprozess in der zuvor gekühlten Messprobe auszulösen, so dass die Messprobe vollständig gefriert. Der Lichtbogen entsteht mittels Schalten der Spannungseinrichtung, die mit der Elektrode und der Gegenelektrode verbunden ist. Zwischen dem ersten Endabschnitt der Elektrode, welcher in die Messprobe eintaucht, und dem zweiten Endabschnitt der Gegenelektrode entsteht beim Anschalten der Spannungseinrichtung ein Lichtbogen, der sich zumindest abschnittsweise in der zuvor gekühlten Messprobe erstreckt, wodurch der Gefrierprozess für die zuvor unterkühlte Messprobe initiiert oder ausgelöst wird. Auf diese Weise ist ein effizientes und reproduzierbares Gefrieren der Messprobe der zu bestimmenden Flüssigkeit ermöglicht. Es ist insbesondere nicht notwendig, Elemente oder Bauteile, die in der Messprobe angeordnet sind zum Auslösen oder beim Auslösen des Gefrierprozesses in der Messprobe zu bewegen.

Die Kühleinrichtung kann eingerichtet sein, die Messprobe auf eine Temperatur unter 0° C gefrierfrei zu kühlen. Die Kühleinrichtung kann mit einem Peltierelement gebildet sein.

Der zweite Endabschnitt der Gegenelektrode kann außerhalb der Messprobe angeordnet sein. Der zweite Endabschnitt der Gegenelektrode ist - im Unterschied zur Elektrode - bei dieser Ausführungsform nicht mit der Messprobe in Kontakt, sondern befindet sich außerhalb der Messprobe. Der Lichtbogen erstreckt sich dann nur teilweise in der Messprobe selbst. Teilweise ist der Lichtbogen außerhalb der Messprobe gebildet.

In einer Ausführung kann vorgesehen sein, dass der zweite Endabschnitt der Gegenelektrode mittels des Probenbehälters selbst gebildet ist. Der Lichtbogen kann sich in der Messprobe zur Behälterwand des Probenbehälters erstrecken, insbesondere zu einem Wandabschnitt, welcher selbst mit der Messprobe in Berührungskontakt ist.

Der zweite Endabschnitt der Gegenelektrode kann außerhalb des Probenbehälters angeordnet sein. Bei dieser Ausführungsform ist der zweite Endabschnitt der Gegenelektrode nicht nur außerhalb der Messprobe, sondern auch außerhalb des Probenbehälters angeordnet. Bei dem Probenbehälter kann es sich bei dieser oder anderen Ausführungsformen um eine Probenküvette handeln. Der Probenbehälter kann allgemein aus einem elektrisch nicht leitenden Material bestehen, beispielsweise Kunststoff. Auch beim Anordnen des zweiten Endabschnitts der Gegenelektrode außerhalb des Probenbehälters erstreckt sich der Lichtbogen nur teilweise in der Messprobe selbst, nämlich der Abschnitt des Lichtbogens, welcher vom ersten Endabschnitt der Elektrode ausgeht. Ein Teil des Lichtbogens ist außerhalb der Messprobe und des Probenbehälters gebildet.

Der zweite Endabschnitt der Gegenelektrode kann in die Messprobe eintauchen und darin beabstandet von dem ersten Endabschnitt der Elektrode angeordnet sein. In diesem Fall erstreckt sich der Lichtbogen zwischen den beiden Endabschnitten in der Messprobe.

Es kann eine Temperaturmesseinrichtung vorgesehen sein, bei der ein Messfühler zumindest abschnittsweise in die Messprobe eintaucht. Die Temperaturmesseinrichtung ermöglicht es, den Temperaturverlauf für die Messprobe beim Kühlen mittels der Kühleinrichtung und / oder während des Gefrierprozesses zu erfassen, nachdem der Gefrierprozess mittels des Lichtbogens (Blitz) ausgelöst wurde. Auch nach dem Gefrierprozess kann der weitere Temperaturverlauf erfasst werden, zum Beispiel zum Bestimmen eines Gefrierplateaus. Auf diese Weise kann die Vorrichtung zum Gefrieren der Messprobe beispielsweise für die Verwendung in einem Gefrierpunkt-Osmometer hergerichtet werden. Gefrierpunkt-Osmometer können dazu benutzt werden, die Osmolalität oder Osomolarität (osmotischer Wert) wässriger Lösungen zu bestimmen. Unabhängig davon kann die Vorrichtung mit der Temperaturmesseinrichtung allgemein genutzt werden, um Temperaturverläufe oder -eigenschaften für die Messprobe zu bestimmen, zum Beispiel den Gefrierpunkt. Die Temperaturmesseinrichtung kann in den verschiedenen Ausführungsformen eingerichtet sein, den Temperaturverlauf zeitaufgelöst zu erfassen.

Der erste Endabschnitt der Elektrode kann in der Messprobe getrennt von dem Messfühler angeordnet sein. Der Messfühler der Temperaturmesseinrichtung wie auch der erste Endabschnitt der Elektrode sind beide zumindest abschnittsweise in der zu kühlenden und zu gefrierenden Messprobe angeordnet, aber beabstandet voneinander. Insbesondere besteht dann kein Berührungskontakt zwischen dem ersten Endabschnitt der Elektrode und dem Messfühler.

Bei dem Messfühler kann ein Messsensor an einem Sensorhalter angeordnet sein, der zusammen mit einem Halterabschnitt des Sensorhalters in die Messprobe eintaucht, und der Halterabschnitt kann zumindest den ersten Endabschnitt der Elektrode bereitstellend ausgeführt sein. Bei dieser Ausführungsform weist der Messfühler einen Messsensor auf, der an einem Sensorhalter des Messfühlers angeordnet. Der Messsensor selbst sowie ein Halterabschnitt des Sensorhalters sind in der Probe angeordnet, tauchen in diese ein. Mit dem Halterabschnitt ist weiterhin zumindest der erste Endabschnitt der Elektrode gebildet, so dass der Sensorhalter des Messfühlers nicht nur dem Halten des Messsensors selbst dient, sondern mit dem Halterabschnitt auch die Funktion des ersten Endabschnitts der Elektrode bereitstellt. Der Lichtbogen erstreckt sich dann zwischen dem Halterabschnitt des Sensorhalters und dem zweiten Endabschnitt der Gegenelektrode durch die Messprobe hindurch.

In einer Ausführungsform kann der Sensorhalter, insbesondere im Bereich des Halterabschnitts, mit einem Stab oder einem Rohr aus einem elektrisch leitenden Material bestehen, beispielsweise Metall, um so den ersten Endabschnitt der Elektrode bereitzustellen. An eine am Ende des Halterabschnitts, welches in die Messprobe eintaucht, kann der Messsensor angeordnet sein. Der Messsensor kann bei dieser oder anderen Ausführungen beispielsweis mit einem Thermistor gebildet sein, also einem elektrischen Widerstand, dessen Widerstandswert sich mit der Temperatur ändert. Der Thermistor kann aus einem gesinterten Metalloxid mindestens eines der folgenden Metalle bestehen: Mangan, Nickel, Kobalt, Eisen, Kupfer und Titan.

Der Messsensor kann in einer Ausführungsform in ein Glasmaterial eingeschmolzen sein, welches mit dem den ersten Endabschnitt der Elektrode bildenden Halterabschnitt des Sensorhalters verbunden ist.

Eine elektrische Leitung, die mit dem Messsensor verbunden ist, kann am Sensorhalter elektrisch isoliert von dem zumindest den ersten Endabschnitt der Elektrode bildenden Halterabschnitt ausgebildet sein. Die elektrische Leitung kann beispielsweise als eine Anschlussleitung für den mit einem Thermistor gebildeten Messsensor ausgeführt sein. Die elektrische Leitung kann durch ein Rohr des Halterabschnitts oder des Sensorhalters verlaufen und hierin elektrisch isoliert aufgenommen sein. Auf diese Weise kann beispielsweise der Halterabschnitt gegenüber der elektrischen Leitung isoliert werden, wenn mit dem Halterabschnitt der erste Endabschnitt der Elektrode bereitgestellt ist.

In einer Ausführungsform können der Sensorhalter mit dem Messsensor sowie die Elektrode (und wahlweise die Gegenelektrode) an einem Modul- oder Haltebauteil angeordnet sein, welches nach dem Einbringen der Messprobe in dem Probenbehälter an dem Probenbehälter eine Probenbehälteröffnung verschließend angebracht wird, beispielsweise in Form eines Verschlussstopfens oder -deckels. Auf der Außenseite kann das Modulbauteil in den verschiedenen Ausführungsformen Anschlüsse für den Messsensor sowie die Elektrode und wahlweise die Gegenelektrode aufweisen, beispielsweise mit einer jeweiligen Steckbuchse.

Es kann eine Behälteraufnahme vorgesehen sein, die eingerichtet ist, den Probenbehälter zum Kühlen und anschließenden Gefrieren aufzunehmen. Die Behälteraufnahme kann eine Vertiefung aufweisen, in die der Probenbehälter zum Kühlen eingestellt wird. Hierbei kann der Probenbehälter in der Vertiefung zumindest abschnittsweise formschlüssig aufgenommen sein. Die Behälteraufnahme kann thermisch an die Kühleinrichtung koppeln, beispielsweise ein Peltierelement, um den in der Behälteraufnahme angeordneten Probenbehälter anfangs gefrierfrei zu kühlen, beispielsweise auf eine Temperatur von weniger als 0° C.

Die Behälteraufnahme kann zumindest den zweiten Endabschnitt der Gegenelektrode bereitstellend oder ausbilden ausgeführt sein. Der zweite Endabschnitt der Gegenelektrode ist bei dieser Ausführungsform außerhalb der Messprobe und außerhalb des Probenbehälters angeordnet und mittels der Behälteraufnahme selbst bereitgestellt. Hierzu kann an der Behälteraufnahme ein metallischer Abschnitt vorgesehen sein, der den zweiten Endabschnitt bildet. Die Behälteraufnahme kann mit einer Schelle ausgeführt sein, die zum Teil oder vollständig aus einem elektrischen Material besteht, insbesondere einem Metall.

Es kann vorgesehen sein, dass zumindest die Elektrode an einer Pipettiervorrichtung gebildet ist, derart, dass der erste Endabschnitt der Elektrode mit der Messprobe in Kontakt gebracht wird, wenn die Messprobe in eine auf die Pipettiervorrichtung (lösbar) aufgesetzte Pipettenspitze eingezogen wird, welche den Probenbehälter bildet und als Einwegartikel ausgeführt sein kann. Hierbei kann vorgesehen sein, dass ergänzend der Messfühler an der Pipettiervorrichtung gebildet ist, welcher dann gleichfalls mit der Messprobe in Kontakt kommt, wenn diese in die Pipettenspitze eingesaugt wird.

Auf diese Weise kann eine Pipettiervorrichtung für die oder zur Verwendung mit der Vorrichtung zum Gefrieren der Messprobe geschaffen sein.

In einer alternativen Ausgestaltung kann ein Aufsatz oder Aufsatzmodul für eine (handelsübliche) Pipettenspitze mit einer Elektrode und einem Temperaturmessfühler vorgesehen sein, welcher / welches eingerichtet ist, lösbar auf die Pipettenspitze aufgesetzt zu werden. Der Aufsatz weist Anschlüsse für die Elektrode und den Temperaturmessfühler auf.

Es ist ein Gefrierpunkt-Osmometer vorgesehen, welches insbesondere dazu dient, den osmotischen Wert wässriger Lösungen zu bestimmen. Aber auch ein vom Ermitteln des osmotischen Werts unabhängige Gefrierpunktbestimmung kann mit Hilfe der vorgeschlagenen Technologie ausgeführt werden. Hierbei ermöglicht die Kühleinrichtung das Unterkühlen der Messprobe auf eine Temperatur von weniger als 0°C, aber gefrierfrei, um dann mittels des Lichtbogens den Gefrierprozess zu initiieren oder auszulösen. Es kann so ein effizientes und reproduzierbares Gefrieren der Messprobe ausgeführt werden, um diese danach wahlweise im gefrorenen Zustand zu bestimmen. Mit Hilfe der optional vorgesehenen Temperaturmesseinrichtung können in Verbindung mit verschiedenen experimentellen Untersuchungen Temperaturmesswerte für den Kühlprozess und / oder den Gefrierprozess für die Messprobe erfasst werden.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Vorrichtung zum Gefrieren einer Messprobe im Schnitt;
- Fig. 2: eine schematische Detaildarstellung eines Messfühlers mit integrierter Elektrode im Schnitt;
- Fig. 3: eine schematische Darstellung eines Messfühlers mit einem Modulbauteil im Schnitt;
- Fig. 4: eine schematische Darstellung eines Probenbehälters mit dem Messfühler aus Fig. 3 im Schnitt;
- Fig. 5: eine schematische Darstellung einer weiteren Vorrichtung zum Gefrieren einer Messprobe im Schnitt;
- Fig. 6: eine schematische Darstellung einer anderen Vorrichtung zum Gefrieren einer Messprobe im Schnitt;
- Fig. 7: eine schematische Darstellung einer anderen Ausgestaltung einer Vorrichtung zum Gefrieren einer Messprobe im Schnitt;
- Fig. 8: eine schematische Darstellung einer weiteren Ausgestaltung einer Vorrichtung zum Gefrieren einer Messprobe im Schnitt und
- Fig. 9: eine schematische Darstellung einer weiteren Ausführung einer Vorrichtung zum Gefrieren einer Messprobe.

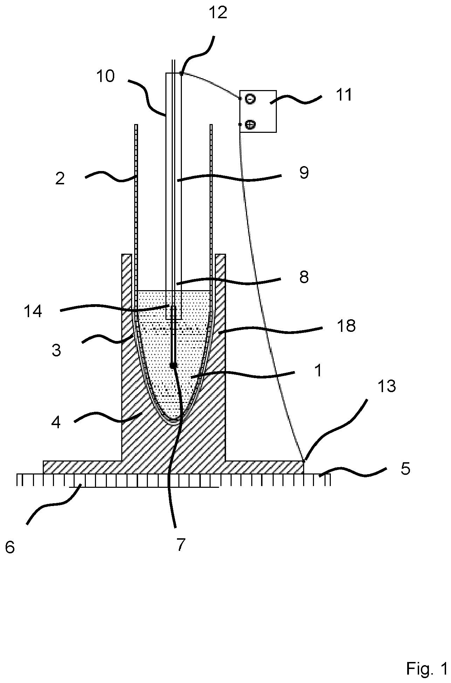

Fig. 1 zeigt eine schematische Darstellung einer Vorrichtung zum Gefrieren einer Messprobe 1, die in einem Probenbehälter 2 aufgenommen ist. Bei der Messprobe 1 handelt es sich um eine gefrierbare Flüssigkeit, die experimentell zu bestimmen ist. Beispielsweise kann vorgesehen sein, die Messprobe 1 osmometrisch zu untersuchen, um deren osmotischen Wert zu bestimmen. Bei dem Probenbehälter 2 kann es sich um eine Küvette handeln, die aus einem elektrisch nicht leitenden Material ist, beispielsweise Kunststoff.

Der Probenbehälter 2 mit der Messprobe 1 ist in einer Vertiefung 3 einer Behälteraufnahme 4 angeordnet, insbesondere formschlüssig. Der Probenbehälter 2 koppelt über die Behälteraufnahme 4 thermisch an eine Kühleinrichtung 5, die im gezeigten Beispiel mit einem Peltierelement 6 gebildet ist. Auf diese Weise kann die Messprobe 1 in dem Probenbehälter 2 gekühlt werden, insbesondere auf eine Messprobentemperatur unterhalb von 0°C, ohne dass es hierbei (schon) zum Gefrieren der Messprobe 1 kommt.

In die Messprobe 1 taucht ein Messsensor 7 ein, der an einem Halterabschnitt 8 eines Sensorhalters 9 eines Messfühlers 10 angeordnet ist. Der Sensorhalter 9 mit dem Halterabschnitt 8 ist bei der gezeigten Ausführungsform mit einem Rohr aus einem elektrisch leitenden Material gebildet, zum Beispiel einem Metall.

Es ist eine Spannungseinrichtung 11 vorgesehen, die an einer Elektrode 12 und einer zugeordneten Gegenelektrode 13 gegenpolige Spannungen bereitstellt, so dass eine Anode und eine Kathode gebildet sind. Die Elektrode 12 ist bei dem gezeigten Ausführungsbeispiel mit dem Halterabschnitt 8 des Sensorhalters 9 (Metallrohr) gebildet, wobei der einen ersten Endabschnitt 14 der Elektrode 12 bildende Halterabschnitt 8 in die Messprobe 1 eintaucht.

Die Gegenelektrode 13 ist bei der in Fig. 1 gezeigten Ausführung an der Behälteraufnahme 4 gebildet. Um die Messprobe 1 in dem Probenbehälter 2 kontrolliert zu gefrieren, wird zunächst mittels der Kühlreinrichtung 5 gekühlt, insbesondere auf eine Messprobentemperatur von weniger als 0°C. Wenn diese Unterkühlung der Messprobe 1 erreicht ist, wird die Spannungseinrichtung 11 geschaltet, so dass zwischen der Elektrode 12 und der Gegenelektrode 13 ein Lichtbogen (Blitz) entsteht, der sich dann zumindest abschnittsweise in der Messprobe 1 erstreckt. Dieser Lichtbogen löst in der unterkühlten Messprobe 1 einen Gefrierprozess aus, so dass die Messprobe 1 gefiert.

Mit Hilfe des Messsensors 7 können für die Messprobe 1 während des Kühlens und / oder des Gefrierens Temperaturmesswerte erfasst werden, beispielsweise zum Bestimmen des Gefrierpunkts der Messprobe 1. Es kann während der Prozesse der Temperaturverlauf messtechnisch erfasst werden.

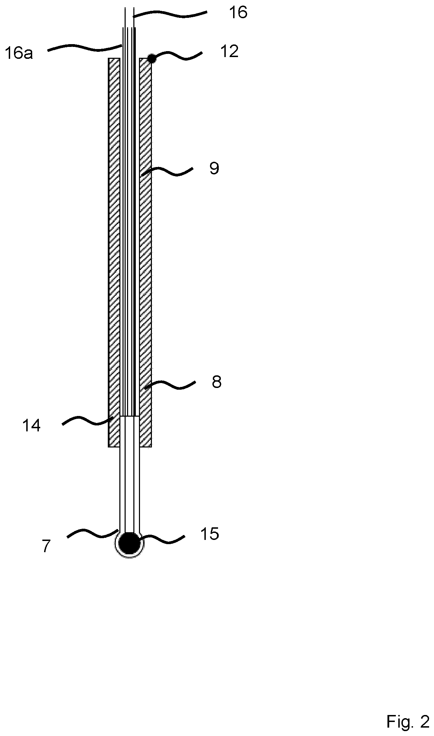

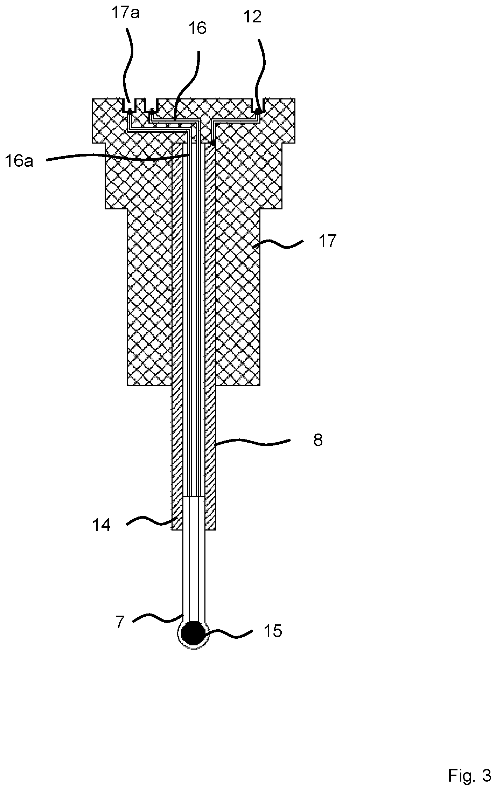

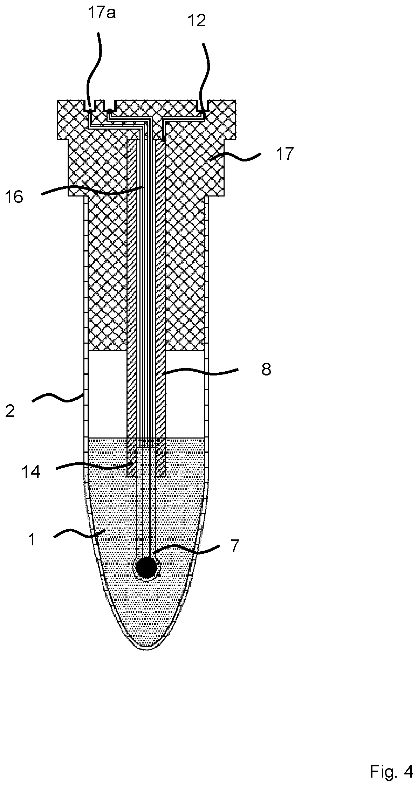

Die Fig. 3 und 4 zeigen schematische Darstellungen für eine Ausführung des Messfühlers 10 sowie eine Anordnung des Probenbehälters 2 mit dem hierin eingesteckten Messfühler 10. Der Messsensor 7 ist mit einem Thermistor 15 gebildet, also einem elektrischen Widerstand, für den sich der Widerstandswert temperaturabhängig ändert. Elektrische Zuleitungen 16 (vgl. Fig. 2) dienen dem Anschluss des Messsensors 7 und verlaufen in dem Sensorhalter 9, also dem Metallrohr. Die elektrischen Zuleitungen 16 sind gegenüber dem Sensorhalter 9 mittels einer jeweiligen Isolierung 16a elektrisch isoliert, die zum Beispiel als Drahtummantelung ausgeführt ist.

Gemäß Fig. 3 und 4 ist der Sensorhalter 9 in einem Modulbauteil 17 aufgenommen, welches gemäß Fig. 4 zum Ausführen des kontrollierten Gefrierprozesses abschnittsweise in den Probenbehälter 2 eingesteckt wird, so dass der Messsensor 7 in die Messprobe 1 angeordnet ist. An dem Modulbauteil sind in Vertiefungen 17a Anschlüsse vorgesehen, um die elektrischen Leitungen 16 mit einer externen Messeinrichtung (nicht dargestellt) zu verbinden. Ebenso dienen die Anschlüsse dazu, die Elektrode mit der Spannung von der Spannungseinrichtung zu versorgen.

Das Modulbauteil 17 ist beispielsweise aus Kunststoff.

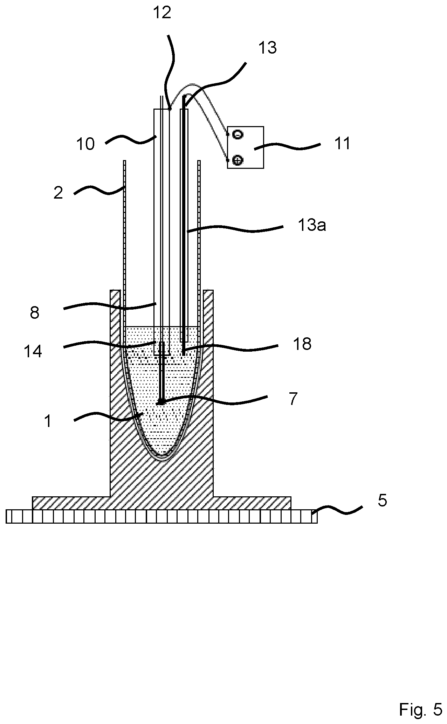

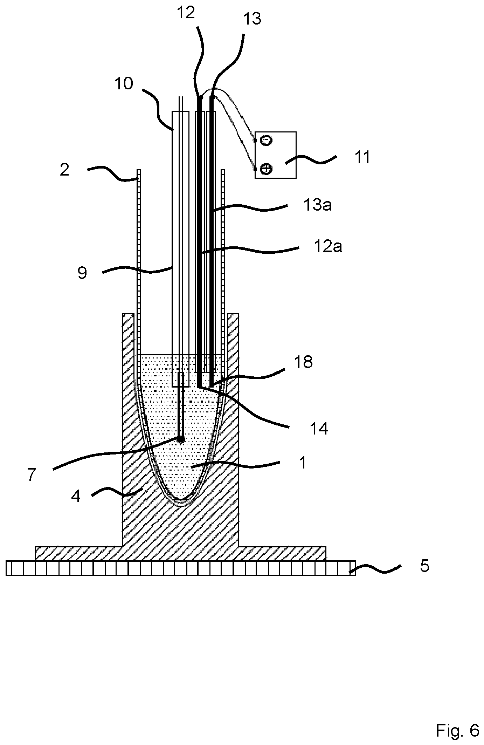

Die Fig. 5 und 6 zeigen weitere Vorrichtungen zum Gefrieren einer Messprobe, wobei für gleiche Merkmale dieselben Bezugszeichen wie in Fig. 1 verwendet sind.

Bei dem Ausführungsbeispiel in Fig. 5 ist die Gegenelektrode 13, im Unterschied zur Ausführung in Fig. 1, unabhängig von der Behälteraufnahme 2 gebildet. Ein zweiter Endabschnitt 18 der Gegenelektrode 13 taucht in die Messprobe 1 ein, so dass der Lichtbogen zwischen dem ersten Endabschnitt der Elektrode und dem zweiten Endabschnitt der Gegenelektrode ausschließlich durch die Messprobe 1 hindurch ausgebildet wird.

Bei dem Ausführungsbeispiel in Fig. 6 sind die Elektrode 12 und die Gegenelektrode 13 jeweils getrennt voneinander und getrennt von dem Messfühler 10 gebildet. Auch bei dieser Ausführungsform erstreckt sich der den Gefrierprozess auslösenden Lichtbogen ausschließlich durch die Messprobe 1 hindurch. Zur elektrischen Isolierung sind eine Elektrodenisolierung 12a und eine Gegenelektrodenisolierung 13a vorgesehen.

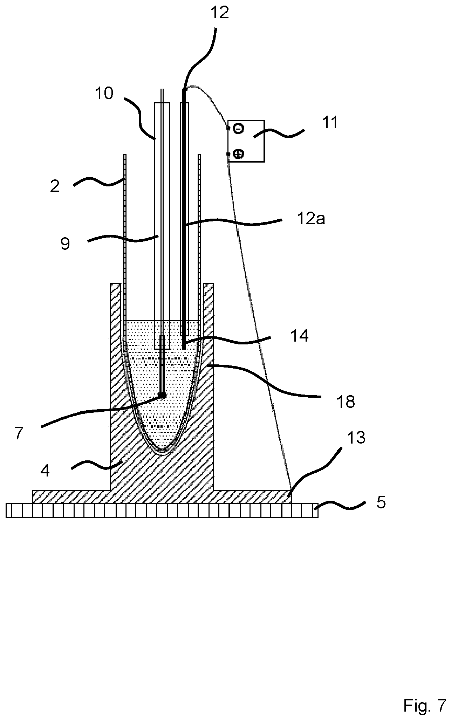

Fig. 7 zeigt eine schematische Darstellung einer anderen Ausgestaltung einer Vorrichtung zum Gefrieren einer Messprobe. Der erste Endabschnitt 14 der Elektrode 12 ist in der Messprobe 1 getrennt von dem Messfühler 10 angeordnet. Der zweite Endabschnitt 18 der Gegenelektrode 13 ist, vergleichbar der Ausgestaltung in Fig. 1, an der Behälteraufnahme 4 gebildet.

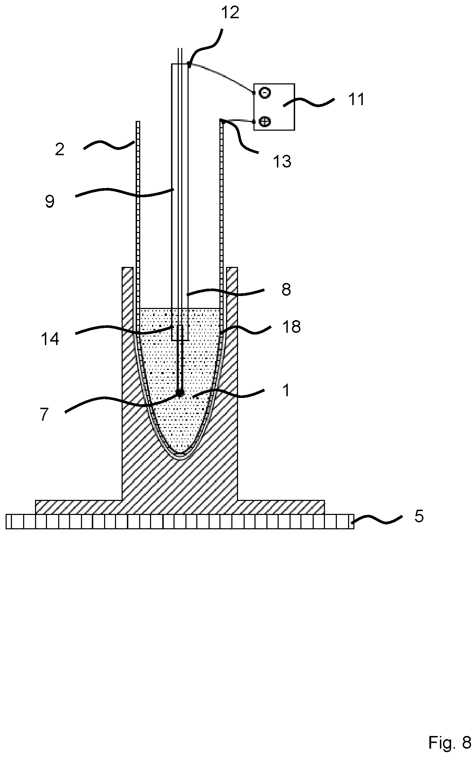

Fig. 8 zeigt eine schematische Darstellung einer weiteren Ausgestaltung einer Vorrichtung zum Gefrieren einer Messprobe. Der erste Endabschnitt 14 der Elektrode 12 ist mit dem Halterabschnitt 8 des Sensorhalters 9 (Metallrohr) gebildet, wobei der den ersten Endabschnitt 14 der Elektrode 12 bildende Halterabschnitt 8 in die Messprobe 1 eintaucht. Der zweite Endabschnitt 18 der Gegenelektrode 13 ist mittels des Probenbehälters 2 gebildet.

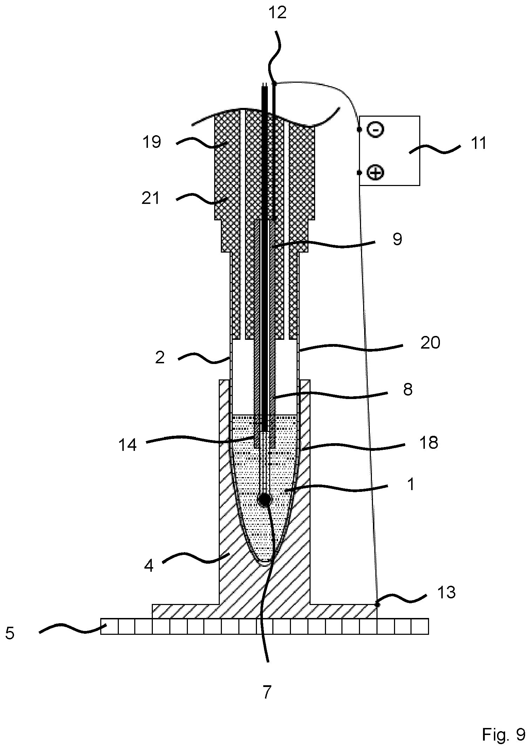

Fig. 9 zeigt eine schematische Darstellung einer weiteren Ausführung einer Vorrichtung zum Gefrieren einer Messprobe. Der erste Endabschnitt 14 der Elektrode 12 ist mit dem Halterabschnitt 8 des Sensorhalters 9 (Metallrohr) gebildet, wobei der den ersten Endabschnitt 14 der Elektrode 12 bildende Halterabschnitt 8 endseitig in die Messprobe 1 eintaucht. Der zweite Endabschnitt 18 der Gegenelektrode 13 ist, vergleichbar der Ausgestaltung in Fig. 1, mittels der Behälteraufnahme 4 gebildet.

Die Elektrode 12 ist an einer Pipettiervorrichtung 19 angeordnet, derart, dass der erste Endabschnitt 14 der Elektrode 12 mit der Messprobe 1 in Kontakt gebracht wird, die in einer auf die Pipettiervorrichtung 19 (lösbar) aufgesetzten Pipettenspitze 20 eingezogen wird, welche den Probenbehälter 2 bildet und als Einwegartikel ausgeführt sein kann. Hierbei ist ergänzend der Messfühler 10 an der Pipettiervorrichtung 19 angeordnet, welcher hierdurch gleichfalls mit der Messprobe 1 in Kontakt kommt, wenn diese in die Pipettenspitze 20 eingesaugt wird.

Die Anordnung an der Pipettiervorrichtung 19 kann mittels eines auf eine Spitze einer Pipette lösbar angeordneten Aufsatzes erfolgen, beispielweise mit dem in Fig. 9 gezeigten Element oder Modul 21.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Gefrierpunkt-Osmometer, aufweisend eine Vorrichtung zum Gefrieren einer osmometrisch zu bestimmenden Messprobe (1), mit:
- einem Probenbehälter (2), der eingerichtet ist, eine osmometrisch zu bestimmende Messprobe (1) einer zu bestimmenden Flüssigkeit aufzunehmen;
- einer Kühleinrichtung (5), die eingerichtet ist, die Messprobe (1) in dem Probenbehälter (2) gefrierfrei zu kühlen;
- einer Elektrode (12), bei der ein erster Endabschnitt (14) in die Messprobe (1) eintaucht; **dadurch gekennzeichnet, dass** die Vorrichtung weiterin umfasst:
- einer Gegenelektrode (13), die einen zweiten, dem ersten Endabschnitt (14) zugeordneten Endabschnitt (18) aufweist; und
- einer Spannungseinrichtung (11), die mit der Elektrode (12) und der Gegenelektrode (13) verbunden und eingerichtet ist, an der Elektrode (12) und der Gegenelektrode (13) gegenpolige Spannungen bereitzustellen, wobei die Spannungseinrichtung (11) zum Auslösen eines Gefrierprozesses in der gefrierfrei gekühlten Messprobe (1) mittels eines Lichtbogens schaltbar ist, um den Lichtbogen zwischen dem ersten Endabschnitt (14) der Elektrode (12) und dem zweiten Endabschnitt (18) der Gegenelektrode (13) auszubilden.

2. Gefrierpunkt-Osmometer nach Anspruch 1, **dadurch gekennzeichnet, dass** der zweite Endabschnitt (18) der Gegenelektrode (13) außerhalb der Messprobe (1) angeordnet ist.

3. Gefrierpunkt-Osmometer nach Anspruch 2, **dadurch gekennzeichnet, dass** der zweite Endabschnitt (18) der Gegenelektrode (13) außerhalb des Probenbehälters (2) angeordnet ist.

4. Gefrierpunkt-Osmometer nach Anspruch 1, **dadurch gekennzeichnet, dass** der zweite Endabschnitt (18) der Gegenelektrode (13) in die Messprobe (1) eintaucht und darin beabstandet von dem ersten Endabschnitt (14) der Elektrode (12) angeordnet ist.

5. Gefrierpunkt-Osmometer nach mindestens einem der vorangehenden Ansprüche, **dadurch gekennzeichnet, dass** eine Temperaturmesseinrichtung vorgesehen ist, bei der ein Messfühler (10) zumindest abschnittsweise in die Messprobe (1) eintaucht.

6. Gefrierpunkt-Osmometer nach Anspruch 5, **dadurch gekennzeichnet, dass** der erste Endabschnitt (14) der Elektrode (12) in der Messprobe (1) getrennt von dem Messfühler (10) angeordnet ist.

7. Gefrierpunkt-Osmometer nach Anspruch 5, **dadurch gekennzeichnet, dass** bei dem Messfühler (10) ein Messsensor (7) an einem Sensorhalter (9) angeordnet ist, der zusammen mit einem Halterabschnitt (8) des Sensorhalters (9) in die Messprobe (1) eintaucht, und der Halterabschnitt (8) zumindest den ersten Endabschnitt (14) der Elektrode (12) bereitstellend ausgeführt ist.

8. Gefrierpunkt-Osmometer nach Anspruch 7, **dadurch gekennzeichnet, dass** eine elektrische Leitung (16), die mit dem Messsensor (7) verbunden ist, am Sensorhalter (9) elektrisch isoliert von dem zumindest den ersten Endabschnitt (14) der Elektrode (12) bildenden Halterabschnitt (8) ausgebildet ist.

9. Gefrierpunkt-Osmometer nach mindestens einem der vorangehenden Ansprüche, **dadurch gekennzeichnet, dass** eine Behälteraufnahme (4) vorgesehen ist, die eingerichtet ist, den Probenbehälter (2) zum Kühlen und anschließenden Gefrieren aufzunehmen.

10. Gefrierpunkt-Osmometer nach Anspruch 9, soweit mindestens auf Anspruch 2 rückbezogen, **dadurch gekennzeichnet, dass** die Behälteraufnahme (4) zumindest den zweiten Endabschnitt (18) der Gegenelektrode (13) bereitstellend ausgeführt ist.

11. Gefrierpunkt-Osmometer nach mindestens einem der vorangehenden Ansprüche, **dadurch gekennzeichnet, dass** zumindest die Elektrode (12) an einer Pipettiervorrichtung gebildet ist, derart, dass der erste Endabschnitt (14) der Elektrode (12) mit der Messprobe (1) in Kontakt kommt, wenn die Messprobe (1) in eine auf die Pipettiervorrichtung aufgesetzte Pipettenspitze eingezogen wird, welche den Probenbehälter (2) bildet.

12. Verfahren zum osmometrischen Bestimmen einer Messprobe (1) unter Verwendung eines Gefrierpunkt-Osmometers nach mindestens einem der vorangehenden Ansprüche, mit:
- Bereitstellen eines Probenbehälters (2);
- Einbringen einer Messprobe (1) einer zu bestimmenden Flüssigkeit in dem Probenbehälter (2);
- gefrierfreiem Kühlen der Messprobe (1) in dem Probenbehälter (2) mittels einer Kühleinrichtung (5),
- Gefrieren der gefrierfrei gekühlten Messprobe (1) in dem Probenbehälter (2), wobei das Gefrieren in der Messprobe (1) mit Hilfe eines Lichtbogens ausgelöst wird, welcher mittels Schalten einer Spannungseinrichtung (11) zwischen einem ersten Endabschnitt (14) einer Elektrode (12), welcher in die Messprobe (1) eintaucht, und einem zweiten Endabschnitt (18) einer Gegenelektrode (13) erzeugt wird, und wobei die Spannungseinrichtung (11) mit der Elektrode (12) und der Gegenelektrode (13) zum Bereitstellen gegenpoliger Spannungen verbunden ist, und
- Bestimmen eines osmotischen Werts der Messprobe (1).

13. Verfahren nach Anspruch 12, **dadurch gekennzeichnet, dass** die Messprobe (1) beim Kühlen auf eine Kühltemperatur von unter 0° C gekühlt wird.

14. Verfahren nach Anspruch 12 oder 13, **dadurch gekennzeichnet, dass** mittels einer Temperaturmesseinrichtung ein Temperaturverlauf für die Messprobe (1) beim Kühlen und beim Gefrieren gemessen wird.

## Claims

1. A freezing point osmometer, having a device for freezing a sample (1) which is to be determined osomometrically, comprising:
- a sample container (2), which is configured to receive a sample (1) of a liquid to be determined, which is to be determined osmometrically;
- a cooling device (5), which is configured to cool the sample (1) in the sample container (2) without freezing;
- an electrode (12), in which a first end portion (14) is immersed into the sample (1);
**characterized in that** the device further comprises:
- a counter electrode (13), comprising a second end portion (18) assigned to the first end portion (14); and
- a voltage device (11), which is connected to the electrode (12) and to the counter electrode (13) and is configured to provide voltages of opposite polarity at the electrode (12) and at the counter electrode (13), wherein the voltage device (11) is switchable by means of an arc for triggering a freezing process in the freeze-free cooled sample (1), in order to form the arc between the first end portion (14) of the electrode (12) and the second end portion (18) of the counter electrode (13).

2. The freezing point osmometer according to Claim 1, **characterized in that** the second end portion (18) of the counter electrode (13) is arranged outside the sample (1).

3. The freezing point osmometer according to Claim 2, **characterized in that** the second end portion (18) of the counter electrode (13) is arranged outside the sample container (2).

4. The freezing point osmometer according to Claim 1, **characterized in that** the second end portion (18) of the counter electrode (13) is immersed into the sample (1) and is arranged therein spaced apart from the first end portion (14) of the electrode (12).

5. The freezing point osmometer according to at least one of the preceding claims, **characterized in that** a temperature measuring device is provided, in which a measuring probe (10) is immersed at least partially into the sample (1).

6. The freezing point osmometer according to Claim 5, **characterized in that** the first end portion (14) of the electrode (12) is arranged in the sample (1) separately from the measuring probe (10).

7. The freezing point osmometer according to Claim 5, **characterized in that** at the measuring probe (10) a measuring sensor (7) is arranged on a sensor holder (9), which together with a holder portion (8) of the sensor holder (9) is immersed into the sample (1), and the holder portion (8) is configured to provide at least the first end portion (14) of the electrode (12).

8. The freezing point osmometer according to Claim 7, **characterized in that** an electric line (16), which is connected to the measuring sensor (7), is formed on the sensor holder (9) in an electrically insulated manner from the holder portion (8) forming at least the first end portion (14) of the electrode (12).

9. The freezing point osmometer according to at least one of the preceding claims, **characterized in that** a container receiver (4) is provided, which is configured to receive the sample container (2) for cooling and subsequent freezing.

10. The freezing point osmometer according to Claim 9, in so far as referring back to at least Claim 2, **characterized in that** the container receiver (4) is configured to provide at least the second end portion (18) of the counter electrode (13).

11. The freezing point osmometer according to at least one of the preceding claims, **characterized in that** at least the electrode (12) is formed on a pipetting device, such that the first end portion (14) of the electrode (12) comes in contact with the sample (1) when the sample (1) is drawn into a pipette tip placed onto the pipetting device, which forms the sample container (2).

12. A method for the osmometric determination of a sample (1) using a freezing point osmometer according to at least one of the preceding claims, comprising:
- providing a sample container (2);
- introducing a sample (1) of a liquid to be determined in the sample container (2);
- cooling, without freezing, of the sample (1) in the sample container (2) by means of a cooling device (5),
- freezing of the freeze-free cooled sample (1) in the sample container (2), wherein the freezing is triggered in the sample (1) by means of an arc which is produced by means of switching of a voltage device (11) between a first end portion (14) of an electrode (12), which is immersed into the sample (1), and a second end portion (18) of a counter electrode (13), and wherein the voltage device (11) is connected to the electrode (12) and to the counter electrode (13) for providing voltages of opposite polarity, and
- determining an osmotic value of the sample (1).

13. The method according to Claim 12, **characterized in that** the sample (1), during cooling, is cooled to a cooling temperature of below 0 °C.

14. The method according to Claim 12 or 13, **characterized in that** a temperature profile for the sample (1) is measured during cooling and on freezing by means of a temperature measuring device.

## Revendications

1. Osmomètre à point de congélation, comportant un dispositif destiné à congeler un échantillon à mesurer (1) dont l'osmotique doit être déterminée, pourvu :
- d'un conteneur d'échantillon (2), qui est configuré pour recevoir un échantillon à mesurer (1) dont l'osmotique doit être déterminée d'un liquide qui doit être déterminé ;
- d'un système de refroidissement (5), qui est configuré pour refroidir sans le congeler l'échantillon à mesurer (1) dans le conteneur d'échantillon (2) ;
- d'une électrode (12), dont un premier segment d'extrémité (14) plonge dans l'échantillon à mesurer (1) ; **caractérisé en ce que** le dispositif comprend par ailleurs
- une contre-électrode (13), qui comporte un deuxième segment d'extrémité (18), associé au premier segment d'extrémité (14) ; et
- un système (11) de mise sous tension, qui est connecté avec l'électrode (12) et la contre-électrode (13) et qui est configuré pour mettre à disposition sur l'électrode (12) et la contre-électrode (13) des tensions à polarités opposées, pour déclencher un processus de congélation dans l'échantillon à mesurer (1) refroidi sans congélation, le système (11) de mise sous tension étant commutable au moyen d'un arc électrique, pour créer l'arc électrique entre le premier segment d'extrémité (14) de l'électrode (12) et le deuxième segment d'extrémité (18) de la contre-électrode (13).

2. Osmomètre à point de congélation selon la revendication 1, **caractérisé en ce que** le deuxième segment d'extrémité (18) de la contre-électrode (13) est placé à l'extérieur de l'échantillon à mesurer (1).

3. Osmomètre à point de congélation selon la revendication 2, **caractérisé en ce que** le deuxième segment d'extrémité (18) de la contre-électrode (13) est placé à l'extérieur du conteneur d'échantillon (2).

4. Osmomètre à point de congélation selon la revendication 1, **caractérisé en ce que** le deuxième segment d'extrémité (18) de la contre-électrode (13) plonge dans l'échantillon à mesurer (1) et est placé dans celui-ci avec un écart par rapport au premier segment d'extrémité (14) de l'électrode (12).

5. Osmomètre à point de congélation selon au moins l'une quelconque des revendications précédentes, **caractérisé en ce qu'**il est prévu un système de mesure de la température, sur lequel une sonde de mesure (10) plonge au moins par segments dans l'échantillon à mesurer (1).

6. Osmomètre à point de congélation selon la revendication 5, **caractérisé en ce que** le premier segment d'extrémité (14) de l'électrode (12) est placé dans l'échantillon à mesurer (1) séparément de la sonde de mesure (10).

7. Osmomètre à point de congélation selon la revendication 5, **caractérisé en ce que** sur la sonde de mesure (10), un capteur de mesure (7) est placé sur un support de capteur (9), qui conjointement avec un segment (8) de support du support de capteur (9) plonge dans l'échantillon à mesurer (1) et **en ce que** le segment (8) de support est conçu pour mettre à disposition au moins le premier segment d'extrémité (14) de l'électrode (12).

8. Osmomètre à point de congélation selon la revendication 7, **caractérisé en ce qu'**une ligne (16) électrique, qui est connectée avec le capteur de mesure (7) est conçue sur le support de capteur (9) en étant électriquement isolée du segment (8) de support constituant l'au moins un premier segment d'extrémité (14) de l'électrode (12).

9. Osmomètre à point de congélation selon au moins l'une quelconque des revendications précédentes, **caractérisé en ce qu'**il est prévu un réceptacle (4) de conteneur qui est configuré pour réceptionner le conteneur d'échantillon (2) pour le refroidir et le congeler par la suite.

10. Osmomètre à point de congélation selon la revendication 9, dans la mesure où elle se réfère au moins à la revendication 2, **caractérisé en ce que** le réceptacle (4) de conteneur est conçu pour mettre à disposition au moins le deuxième segment d'extrémité (18) de la contre-électrode (13).

11. Osmomètre à point de congélation selon au moins l'une quelconque des revendications précédentes, **caractérisé en ce qu'**au moins l'électrode (12) est constituée sur un dispositif de pipetage, de telle sorte que le premier segment d'extrémité (14) de l'électrode (12) entre en contact avec l'échantillon à mesurer (1) lorsque l'échantillon à mesurer (1) est tiré dans une pointe de pipette posée sur le dispositif de pipetage, laquelle constitue le conteneur d'échantillon (2).

12. Procédé, destiné à déterminer l'osmotique d'un échantillon à mesurer (1) en utilisant un osmomètre à point de congélation selon au moins l'une quelconque des revendications précédentes, comprenant :
- la mise à disposition d'un conteneur d'échantillon (2) ;
- l'introduction d'un échantillon à mesurer (1) d'un liquide qui doit être déterminé dans le conteneur d'échantillon (2) ;
- le refroidissement sans congélation de l'échantillon à mesurer (1) dans le conteneur d'échantillon (2), au moyen d'un système de refroidissement (5),
- la congélation dans le conteneur d'échantillon (2) de l'échantillon à mesurer (1) refroidi sans congélation, le refroidissement dans l'échantillon à mesurer (1) étant déclenché au moyen d'un arc électrique, lequel est généré au moyen d'une commutation d'un système (11) de mise sous tension entre un premier segment d'extrémité (14) d'une électrode (12), lequel plonge dans l'échantillon à mesurer (1) et un deuxième segment d'extrémité (18) d'une contre-électrode (13) et le système (11) de mise sous tension étant connecté avec l'électrode (12) et la contre-électrode (13), pour mettre à disposition des tensions à polarités opposées et
- la détermination d'une valeur osmotique de l'échantillon à mesurer (1).

13. Procédé selon la revendication 12, **caractérisé en ce que** lors du refroidissement, l'échantillon à mesurer (1) est refroidi à une température de refroidissement inférieure à 0° C.

14. Procédé selon la revendication 12 ou 13, **caractérisé en ce qu'**au moyen d'un système de mesure de la température, une courbe de température est mesurée pour l'échantillon à mesurer (1) lors du refroidissement et lors de la congélation.
